# EUROPÄISCHE PATENTSCHRIFT

(11) **EP 0 299 369 B1**
(45) Veröffentlichungstag und Bekanntmachung des Hinweises auf die Patenterteilung: **18.11.1993**
(21) Anmeldenummer: 88110903.7
(22) Anmeldetag: 08.07.1988
(51) Int. Cl.: C02F 3/30, C02F 3/34, C02F 3/10, C11D 1/00

(54) **Dezentrales Klärverfahren**
Decentralized clarification process
Procédé décentralisé de clarification

(30) Priorität: 17.07.1987 DE 3723718
(43) Veröffentlichungstag der Anmeldung: 18.01.1989
(73) Patentinhaber: Henkel Kommanditgesellschaft auf Aktien, 40191 Düsseldorf (DE)
(72) Erfinder: Gode, Peter, Dr., D-4018 Langenfeld (DE); Riebe, Jens Peter, Dr., D-4010 Hilden (DE); Jeromin, Lutz, Dr., D-4010 Hilden (DE)

(56) Entgegenhaltungen:
- EP-A- 0 048 675
- EP-A- 0 121 851
- BE-A- 866 935
- DE-A- 2 939 169
- DE-A- 3 419 139
- DE-A- 3 537 310
- DE-C- 290 126
- FR-A- 2 235 089
- LU-A- 60 783
- JOURNAL WATER POLLUTION CONTROL FEDERATION, vol. 56, no. 11, November 1984, pages 1173-1177, Washington, DC, US; S. GONZALEZ-MARTINEZ et al.: "Aerobic and anaerobic intermediate storage of activated sludge: efficiency study"
- CHEMICAL ABSTRACTS, Band 93, Nr. 20, November 1980, Seite 98, Zusammenfassung Nr. 188136w, Columbus, Ohio, US; & JP-A-80 99 306 (NITTO ELECTRIC INDUSTRIAL CO., LTD) 29-07-1980
- CHEMICAL ABSTRACTS, Band 88, Nr. 20, 1978, Seite 92, Zusammenfassung Nr. 138247j, Columbus, Ohio, US; & PL-A-87 032 (KRAJOW ZWIAZEK SPOLDZIELNI PRZEMYSLU FARMACEUTYCZNEGO I CHEMICNEGO) 30-11-1976
- CHEMICAL ABSTRACTS, Band 97, Nr. 24, Dezember 1982, Seite 102, Zusammenfassung Nr. 199888b, Columbus, Ohio, US; & SU-A-950 759 (R.G. ALAGEZYAN et al.) 15-08-1982

## Beschreibung

Die Erfindung betrifft ein Verfahren zur biologischen Klärung von Abwässern aus Betrieben, die tierische und/oder pflanzliche Produkte verarbeiten vor Ort im Entstehungsbetrieb.

Bekanntlich ist es üblich, daß Abwässer der unterschiedlichsten Zusammensetzung in zentralen Kläranlagen mechanisch und/oder biologisch gesäubert werden. Wenngleich derartige zentrale Klärverfahren sehr effektiv gestaltet werden können, so sind sie doch aufgrund der Vielzahl der Einleiter nicht auf die Erfordernisse des einzelnen Abwassers optimal eingestellt, benötigten Energie und können überlastet werden. Darüber hinaus haben zentrale Anlagen den Nachteil, daß bei einer Störung der Gesamtabwasserstrom ungenügend geklärt in Vorfluter abgelassen werden muß.

Im Rahmen des verstärkten Umweltbewußtseins werden daher neuerdings Verfahren diskutiert, die die Vorklärung spezieller Abwässer vor Ort in dezentralen Anlagen erlauben (sogenannte Insel-Lösungen).

In Fachkreisen bekannt sind beispielsweise dynamische Bioreaktoren (Prof. Brauer, Institut für Chemie und Ingenieurtechnik der Techn. Universität, Berlin), bei denen in einem zylindrischen Gefäß ein mit Lochscheiben bestücktes Hubelement hin und her bewegt wird, wobei nach Wahl aerobe oder anaerobe Bedingungen eingestellt werden können. Wenngleich hier auf engem Raum sehr gute Klärergebnisse bewirkt werden, so ist doch durch das Vorhandensein mechanisch bewegter Teile eine Störanfälligkeit gegeben. Darüberhinaus muß in aufwendiger Weise der Bewegungsablauf gesteuert werden und im Falle der aeroben Variante für Sauerstoffeintrag gesorgt werden.

Aus einem Firmenprospekt "Biologische Abwasserreinigung im Hochleistungsreaktor und Schwerkraftabscheider" der Firma NEBA GmbH & Co. KG., Postfach 1160, 6452 Heinburg 1, wird ein sogenannter RMC-Abscheider-Bioreaktor beschrieben. Bei diesem Reaktor handelt es sich grob gesprochen um einen Fettabscheider, wie er in Schlachthäusern und fleichverarbeitenden Betrieben gängig ist, der durch Zusatz von aerob lebenden Bakterien in ein aerobes Klärsystem umgewandelt worden ist. Nachteilig ist die Störanfälligkeit und die relativ langen Regenerationszeiten nach eingetretener Störung. Darüber hinaus werden beim rein aeroben Betrieb die Schadstoffe größtenteils in Biomasse umgewandelt, die dann in einem nachfolgenden Schritt abgetrennt werden muß oder das Kanalsystem belastet.

Zweistufige Verfahren zum Reinigen von Abwässern, bei denen teils aerob teils anaerob gearbeitet wird, sind als Acidogenesis/Methanogenesis-Verfahren auf dem hier betroffenen Fachgebiet bekannt. Derartige Verfahren und dazu geeignete Vorrichtungen werden beispielsweise in dem belgischen Patent BE-A-866 935, in der DE-A-3 537 310 und in der DE-A-29 39 169 beschreiben. Die europäische Patentanmeldung EP-A-0 048 675 erwähnt ein demgemäßes Verfahren, das in drei Stufen arbeitet, um die verschiedenen Biozonosen möglichst zu trennen. Dabei findet in der ersten Stufe eine Hydrolyse, in der zweiten die Acidogenesis und in der der dritten die Methanogenesis statt. Die genannten Verfahren sind jedoch empfindlich gegen Stoßbelastungen, wie sie beim plötzlichen Eintritt größer Wassermengen, bei pH-Stößen oder dergleichen auftreten.

Vor diesem Hintergrund ist es Aufgabe der Erfindung, ein Klärverfahren bereitzustellen, das in dezentralen Einrichtungen eine gute Klärwirkung bewirkt (starke Senkung der Belastung), und das darüber hinaus sich durch geringe Störanfälligkeit und durch kurze Einfahrzeit nach Störung oder bei Inbetriebnahme des Systems auszeichnet.

Gegenstand der Erfindung ist daher ein Verfahren zur Reinigung von Abwässern mit hoher Belastung durch Fette, Eiweißstoffe, und/oder Kohlehydrate pflanzlicher oder tierischer Herkunft oder deren Verarbeitungsprodukten mittels Abbau durch Mikroorganismen in einem Durchflußreaktor, bei dem unter gleichzeitigen Abscheiden von Fetten und/oder Schlämmen
- beim Durchströmen eines ersten Reaktorteils mittels aerob und anaerob lebender Mikroorganismen, der vorhandene freie Sauerstoff des Wassers unter Abbau zumindest eines Teils der Schadstoffe zu Gärungsprodukten verbraucht wird, und
- beim Durchströmen eines daran anschließenden weiteren Reaktorteils die Gärungsprodukte und eventuell die noch vorhandenen Schadstoffe in Gegenwart der anaerob lebenden Mikroorganismen zu vorwiegend Faulgas und Biomasse umgesetzt werden,
wobei zur Verminderung der Störanfälligkeit des Systems gewünschtenfalls düngende und/oder pH-stabilisierende Stoffe oder weitere Hilfsstoffe zugesetzt werden können, dadurch gekennzeichnet, daß man einen Teil des Abwassers und die darin lebenden Mikroorganismen in einer strömungsgeschützten Zone einer beliebig langen Verweildauer unterwirft, wobei als strömungsgeschützte Zone blind endende Rohre eingesetzt werden, die mit Füllkörpern oder Schwämmen versehen sind.

Der Erfindung liegt der Gedanke zugrunde, die dezentrale Reinigung von Abwässern in mindestens zwei Stufen anaerob durchzuführen. Dabei ist es Aufgabe der ersten Stufe, die Bedingungen, nämlich die Sauerstofffreiheit, für den anaeroben Prozeß durch Veratmen des Sauerstoffes zu schaffen. Darüber hinaus entstehen in dieser Stufe aus den Schadstoffen Gärungsprodukte, die den Mikroorganismen der nachfolgenden Stufe als Nahrung dienen und von diesen unter Bildung von Faulgas abgebaut werden. Es hat sich als zweckmäßig erwiesen, die Stufen in getrennten Kammern, durchzuführen, um den unterschiedlichen Milieu-Ansprüchen, nämlich vorzugsweise saurer pH-Wert in der ersten Stufe und neutralerer bis alkalischer pH-Wert und sehr niedriges Redoxpotential in der zweiten Stufe Rechnung zu tragen.

Bei der Durchführung des erfindungsgemäßen Verfahrens können in der Praxis Stoßbelastungen auftauchen. Es sind dies Druckstöße (plötzlicher Eintritt größerer Wassermengen), Temperaturstöße (heißes Wasser), pH-Stöße (sauer oder alkalisch) oder erhöhte Konzentrationen von Reinigungs- oder Desinfektionsmitteln. Um dabei Störungen im Ablauf des erfindungsgemäßen Verfahrens zu vermeiden, werden in dem Reaktor Totzonen angelegt. Es sind dies Zonen, die nur in einem sehr langsamen Stoffaustausch mit der Umgebung stehen, und in denen das Abwasser und die darin lebenden Mikroorganismen einer beliebig langen Verweildauer unterworfen sind, und die im Falle einer Vernichtung eines Teiles oder aller lebenden Mikroorganismen als Reservoir für eine Rückbesiedlung dienen können. Geeignet sind hierzu blind endende Rohre, die mit Füllkörpern oder Schwämmen versehen sind.

Zur Vermeidung von Störungen durch Druckstöße und große Wassermengen kann das erfindungsgemäße Verfahren so gestaltet werden, daß ein Aufschwämmen eines Teiles oder aller Mikroorganismen verhindert wird. Dazu kann ein Teil des geklärten Abwassers in eine davor liegende Zone des Durchflußreaktors zurückgeführt werden. Besonders zweckmäßig ist die Rückführung eines etwa 10 %igen Volumenstroms vom Ausfluß in die erste oder die zweite Stufe des Reaktors.

Nach einer weiteren Ausgestaltung der Erfindung können im Reaktor Vorrichtungen angebracht werden, die sich zum Bewuchs durch die Mikroorganismen besonders eignen, so daß man einen Teil der aeroben oder anaeroben Mikroorganismen auf stationären Oberflächen aufwachsen läßt. Dazu können Wände, Membranen, Septen, rauhe Kunststoff- oder Metalloberflächen, flottierende Füllkörper, Kunststoffschwämme und dergleichen miteingesetzt werden.

Im erfindungsgemäßen Verfahren kann der erste Teil des Abbaus durch eine Vielzahl von Mikroorganismenarten bewirkt werden. Vorzugsweise verwendet man Mischkulturen, wie sie beispielsweise im Belebtschlamm von kommunalen Anlagen auftreten bzw. sich durch Luftinfektion selbst einstellen. Selbstverständlich ist es möglich, anstelle der Mischkulturen Kulturen einzelner, spezieller Mikroorganismenstämme mit hoher Leistung einzusetzen. Eine Vielzahl geeigneter Stämme kann den Katalogen öffentlicher Hinterlegungsstellen entnommen werden.

Beim Einfahren der Anlage wird der Fachmann zweckmäßigerweise mit Belebtschlamm beimpfen, sich anderer leicht zugängliche Quellen bedienen oder abwarten, bis durch Infektionen aus der Umgebungsluft sich von selbst ein Bakterienrasen gebildet hat.

Auch die Wahl der im zweiten Teil eingesetzten Mikroorganismen ist für die Durchführung des erfindungsgemäßen Verfahrens nicht kritisch. Eingesetzt werden hier anaerob lebende methanbildende Bakterien. Dabei sind Mischkulturen bevorzugt, wie sie in faulenden Materialien, wie anaeroben Faulschlämmen, Sedimenten von Gewässern oder auch in Fäkalien, wie beispielsweise dem Darminhalt von Schlachttieren, angetroffen werden. Zur Beimpfung wird der Fachmann sich, wie bei den aeroben Mikroorganismen derartiger Schlämme oder Sedimente bedienen. Darüber hinaus können jedoch auch spezielle daraus isolierte Stämme besonders hoher Abbauleistung eingesetzt werden. Eingesetzt werden können auch biologisch aktive oder reaktivierbare Präparationen entsprechender Mikroorganismen.

Für die Praxis kann es zweckmäßig sein, spezielle Zubereitungen einzelner Stämme oder von Mischkulturen einzusetzen. So kann beispielsweise mit Bakterien, Supensionen im Fall der anaeroben Bakterien sauerstofffrei sein müssen, oder aber auch mit gefriergetrockneten Präparaten das Verfahren in Gang gesetzt oder in Gang gehalten werden.

Das erfindundsgemäße Verfahren wird zweckmäßigerweise in einem Durchflußreaktor betrieben. Als Durchflußreaktoren können alle Gefäße sehr geeignet sein, die es erlauben, Abwasser einer gewissen Verweildauer zu unterziehen und dabei einen Teil des Abwassers von Kontakt mit Luft oder Sauerstoff fernzuhalten sowie Stoffe mit geringer Dichte abzutrennen.

Nach einer Ausgestaltungsform des Verfahrens kann es gewünscht sein, in der aeroben oder in der anaeroben Stufe gleichzeitig eine mechanische Stofftrennung durchzuführen. Bevorzugte Reaktoren sind daher Trennvorrichtungen für Flüssigkeiten oder Trennvorrichtungen für Flüssigkeiten und Feststoffen. Unter diesen wiederum können Fettabscheider besonders bevorzugt sein.

Unter der zweiten Stufe im Sinne der Erfindung wird die Summe der Kammern oder Becken verstanden, die das Abwasser nach Durchlaufen eines ersten Beckens erreicht.

Geeignete Trennvorrichtungen zur Trennung von Flüssigkeiten, wie sie erfindungsgemäß eingesetzt werden können, sind beispielsweise aus der DE-A 16 92 423, aus der DE 22 07 633 oder aus der internationalen Anmeldung WO 83/01206 bekannt. Auch der in der britischen Patentschrift 1 152 702 beschriebene Ölabscheider kann verwendet werden, wenn mehrere derartige Geräte hintereinander geschaltet werden.

In jedem Falle ist es wünschenswert, daß der Durchflußreaktor mehrere Kammern enthält, wobei die Kammerwände durchbrochen sind, so daß beim Durchfließen zumindest in einem Teil der Abwassermenge Verwirbelungen stattfinden.

Bei der Ausgestaltung des Reaktorsystems hat der Fachmann die Verweildauer des Abwassers zu beachten. Im Interesse einer effektiven Klärung sollten Verweildauer 3 bis 15 Minuten in der aeroben und in der anaeroben Stufe nicht unterschritten werden. Nach oben hin ist die Verweildauer zwar offen. Da jedoch möglichst große Abwassermengen in einem möglichst kleinen Durchflußreaktor zu reinigen sind, ist es zweckmäßig, das Verfahren nach Eliminierung von mehr als 50 und insbesondere von mehr als 80 oder mehr als 90 % der organischen Belastung abzubrechen, je nach vorhandener Mikroorganismenmenge. Übliche Verweilzeiten liegen bei 0,5 - 8 Tagen, insbesondere 1 - 4 Tagen.

Nach einer weiteren Ausgestaltung der Erfindung wird für die Entsorgung der entstehenden Faulgase gesorgt. So können alle oder ein Teil der Kammern des Durchflußreaktors mit einer Abgasentlüftung verbunden sein, die zumindest vorzugsweise ein Ventil gegen Rückdiffusion von Sauerstoff enthält. Andererseits kann es jedoch auch gewünscht sein, die entstandenen Faulgase mit dem vorgeklärten Abwasser in den Kanal abzuleiten.

Nach einer weiteren Ausgestaltung des erfindungsgemäßen Verfahrens kann es vorgesehen sein, daß ein Teil des den Durchflußreaktor durchströmenden Wassers mit der Umgebungsluft in Kontakt gebracht wird, und daß man an der Kontaktstelle streng aerobe, an der Wasseroberfläche lebende Mikroorganismen, die zum Abbau geruchsbildender Stoffe befähigt sind, wachsen läßt. In jedem Falle ist ein Luftkontakt, etwa bei Öffnen einer Revisionsöffnung wenig kritisch.

Nach einer weiteren Ausgestaltungsform wird im erfindungsgemäßen Verfahren Vorsorge gegen pH-Stöße getroffen. So können dem zu klärenden Wasser Puffersubstanzen oder deren wäßrige Lösungen zugesetzt werden. Bevorzugt sind Puffersubstanzen, deren Lösungen einen pH-Wert zwischen 7 und 10 aufweisen und unter diesen insbesondere bioverträgliche Puffer. So können beispielsweise die Salze der Alkalimetalle oder des Ammoniums mit Carbonsäuren oder Phosphorsäure als Puffer eingesetzt werden.

Das erfindungsgemäße Verfahren kann weiterhin vorsehen, daß zur Verbesserung des Wachstums der Mikroorganismen und damit zur Erhöhung der Abbaugeschwindigkeit Mangelelemente zugesetzt werden, die dieses Wachstum begrenzen. Eingesetzt werden können Verbindungen der Elemente N, P, S, K, Ca, Mg, Fe. So können beispielsweise die Ammonium- oder Alkalisalze der Elemente N, P und S, also Nitrate, Nitrite, Phosphate und Sulfate eingesetzt werden. Weiter eingesetzt werden können bioverträgliche Salze, vorzugsweise lösliche Salze der Elemente Kalium, Calcium, Magnesium und Eisen. Geeignete Zusammenstellungen von Spurenelementen kann der Fachmann den literaturbekannten Nährmedien für anaerobe und für aerobe Bakterien entnehmen.

Nach einer weiteren Ausführungsform der Erfindung werden Mangelverbindungen eingesetzt, die gleichzeitig Pufferwirkung haben. So haben Salze wie Natrium- oder Kaliumphosphate und die dazugehörigen Hydrogenphosphate einerseits puffernde Wirkung, dienen andererseits jedoch auch als Phosphatquellen.

Im Rahmen des erfindungsgemäßen Verfahrens kann es auch bevorzugt sein, leicht faulbare Substanzen einzusetzen. Dies empfiehlt sich insbesondere beim Start zu Betriebsbeginn oder nach Störfällen. So hat es sich als günstig erwiesen, bei der Inbetriebnahme oder nach Störfällen Kohlenhydrate wie Stärke- oder Zuckerlösungen, insbesondere von Rohrzucker, Glucosesirup oder dergleichen einzusetzen. Dabei wird der Fachmann doch darauf achten, daß die beim Abbau von Zucker entstehenden Säuren nicht den pH-Wert in der zweiten Stufe soweit senken, daß dort Vergiftungserscheinungen eintreten. Zweckmäßigerweise werden daher zusammen oder nach den Kohlenhydratlösungen geeignete Puffersubstanzen eingesetzt.

Bei der Durchführung des erfindungsgemäßen Verfahrens kann es bevorzugt sein, im Abwasser vorhandene Stoffe zu zerkleinern. Dies kann prinzipiell durch mechanische oder chemische Einwirkung geschehen. So können z. B. Emulgatoren zur Dispergierung von Fetten mitverwendet werden, oder es kann eine mechanische Zerkleinerung vorgeschaltet werden.

Nach einer weiteren Ausführungsform des erfindungsgemäßen Verfahrens können in das Abwasser auch sauerstoffzehrende Stoffe eingeleitet werden. Als sauerstoffziehender Stoff ist beispielsweise Natriumthiosulfat geeignet. Nach einer weiteren Ausführungsform können zur Ausfällung von Schwefelwasserstoffen auch Eisensalze, die unlösliche Sulfide bilden, eingesetzt werden.

In einer weiteren Ausgestaltungsform des erfindungsgemäßen Verfahrens kann es vorgesehen sein, das Abwasser während der Passage der Durchflußeinrichtung zu durchmischen. Zur Durchmischung können neben fest eingebauten Mischelementen (Schikanen) auch kontinuierlich oder diskontinuierlich betriebene Rührer eingesetzt werden. Darüber hinaus ist es möglich, die Durchmischung zu bewirken, in dem man Gase durchleitet. Dabei soll jedoch darauf geachtet werden, daß die Gase möglichst sauerstofffrei sind. Geeignet ist somit Faulgas, aber auch Stickstoff oder CO₂.

Das erfindungsgemäße Verfahren ist vorzugsweise für die Vorklärung von Abwässern von Nahrungsmittelbetrieben, wie beispielsweise Schlachthöfen, Fleischereien aber auch Großbäckereien, Schnapsbrennereien und dergleichen geeignet. Zur Durchführung des Verfahrens ist es bevorzugt, die in diesen Betrieben üblichen Reinigungs- und Desinfektionsarbeiten mit einem bestimmten Reinigungsmittel bzw. Desinfektionsmittel auszuführen, das die Biologie des Abwasservorklärungssystems nicht schädigt.

Mit Hilfe des erfindungsgemäßen Verfahrens ist es möglich, den in das Kanalsystem gelangenden Anteil an organischen Verbindungen aus Schlachthöfen, fleischverarbeitenden Betrieben etc. ohne Energieaufwand drastisch zu senken. Dabei ist das Verfahren energiesparend und nicht störungsanfällig.

### Beispiele

### Beispiel 1

Drei Laborfischzuchtbecken wurden über zwei Rohrleitungen, die jeweils nur kurz unterhalb der Oberkante angebracht waren, miteinander verbunden. In jedem Becken waren senkrecht zum Wasserspiegel Lochbleche als Strömungsschikanen gelagert. Die Becken waren mit Deckeln praktisch luftdicht verschlossen. Das erste Becken (Stufe 1) enthielt einen Wassereinlaß, das letzte einen Wasserauslaß. Aus einem Vorratsgefäß wurde eine Dispersion von Fett in Wasser ( 500 mg Fett/l stabilisiert, mit einem EthylenoxidpropylenoxidBlockcopolymeren als Emulgator) in einer solchen Geschwindigkeit durch das System geleitet, das 10 % der Gesamtwassermenge pro Stunde ausgetauscht wurden. Das erste Becken (Stufe 1) wurde mit Belebtschlamm, das zweite und dritte Becken (Stufe 2) mit Faulschlamm beimpft. Nach einer Betriebsdauer von 1/2 Tagen betrug der CBS-Wert (chemischer Sauerstoffbedarf) im ersten Becken 14.108 mg/l und im dritten Becken 2.171 mg/l.

### Beispiel 2

Zur Stimulierung einer stoßartigen Belastung wird im ersten Becken eine Konzentration von 2 g Zucker pro Liter eingestellt. Nach kurzer Zeit wird in Becken 2 und 3 das Absinken des pH-Werts beobachtet, so daß die anaerobe Vergärung praktisch zum Erliegen kommt. Bei gleichzeitigem Einsatz eines Kaliumphosphatpuffers (2 g/l) bleibt der anaerobe Abbau fast ungestört.

### Beispiel 3

Es wird beobachtet, daß nach einem Säurestoß durch die rasche Vergärung von Zucker der anaerobe Abbau bereits nach kurzer Zeit wieder in Gang kommt, wenn in den Becken 2 und 3 senkrechtstehende, Glasringe als Füllkörper enthaltende wassergefüllte Reagenzgläser verteilt angebracht worden sind.

### Beispiel 4

Der Durchflußreaktor wird innerhalb von 15 Minuten mit einem dreifachen Volumen an Wasser durchgespült. Es wird beobachtet, daß die Elimination von CSB vermutlich wegen Fortschwemmen der Bakterien stark nachläßt. Eine graduelle Besserung wird erhalten, indem mittels einer Schlauchpumpe vom Ausfluß ein Volumenstrom von etwa 10 % der Wassermenge über eine Dosierpumpe abgezogen und in Becken 2 abgegeben wird.

### Beispiel 5

Im Becken 3 wird das über der Wasseroberfläche stehende Faulgas durch eine Pumpe abgesaugt und am Beckengrund eingeleitet. Durch die Verwirbelung wird eine leichte Steigerung der Eliminationsrate erreicht.

## Patentansprüche

1. Verfahren zur Reinigung von Abwässern mit hoher Belastung durch Fette, Eiweißstoffe, und/oder Kohlehydrate pflanzlicher oder tierischer Herkunft oder deren Verarbeitungsprodukten mittels Abbau durch Mikroorganismen in einem Durchflußreaktor, bei dem unter gleichzeitigen Abscheiden von Fetten und/oder Schlämmen
- beim Durchströmen eines ersten Reaktorteils mittels aerob und anaerob lebender Mikroorganismen, der vorhandene freie Sauerstoff des Wassers unter Abbau zumindest eines Teils der Schadstoffe zu Gärungsprodukten verbraucht wird, und
- beim Durchströmen eines daran anschließenden weiteren Reaktorteils die Gärungsprodukte und eventuell die noch vorhandenen Schadstoffe in Gegenwart der anaerob lebenden Mikroorganismen zu vorwiegend Faulgas und Biomasse umgesetzt werden,
wobei zur Verminderung der Störanfälligkeit des Systems gewünschtenfalls düngende und/oder pH-stabilisierende Stoffe oder weitere Hilfsstoffe zugesetzt werden können, dadurch gekennzeichnet, daß man einen Teil des Abwassers und die darin lebenden Mikroorganismen in einer strömungsgeschützten Zone einer beliebig langen Verweildauer unterwirft, wobei als strömungsgeschützte Zone blind endende Rohre eingesetzt werden, die mit Füllkörpern oder Schwämmen versehen sind.

2. Verfahren nach Anspruch 1, dadurch gekennzeichnet, daß man als anaerob lebende Mikroorganismen Mischkulturen einsetzt, wie sie beispielsweise auch im aeroben Teil kommunaler Kläranlagen vorgefunden werden.

3. Verfahren nach einem der Ansprüche 1 oder 2, dadurch gekennzeichnet, daß man zur Beimfpung mit anaerob lebenden Mikroorganismen faulende Materialien wie anaerobe Faulschlämme, Sedimente von Gewässern und/oder Fäkalien oder daraus hergestellte biologisch aktive oder zumindest reaktivierbare Präparationen einsetzen.

4. Verfahren nach einem der Ansprüche 1 bis 3, dadurch gekennzeichnet, daß man als Durchflußreaktor dezentralbetriebene Abwasservorrichtungen einsetzt.

5. Verfahren nach einem der Ansprüche 1 bis 4, dadurch gekennzeichnet, daß man einen Teilstrom des geklärten Abwassers in das Durchflußsystem, vorzugsweise in einen vorher durchströmten Teil des Durchflußsystems zurückführt.

6. Verfahren nach einem der Ansprüche 1 bis 5, dadurch gekennzeichnet, daß man einen Teil der aerob oder der anaerob lebenden Mikroorganismen auf stationären Oberflächen, wie Wänden, Septen, flottierenden Füllkörpern und dergleichen aufwachsen läßt.

7. Verfahren nach einem der Ansprüche 1 bis 6, dadurch gekennzeichnet, daß entstehende Faulgase direkt oder durch ein die Rückdiffusion von Sauerstoff verhinderndes Ventil ableitet.

8. Verfahren nach einem der Ansprüche 1 bis 7, dadurch gekennzeichnet, daß man entstehende Faulgase mit dem geklärten Abwasser ausschleust.

9. Verfahren nach einem der Ansprüche 1 bis 8, dadurch gekennzeichnet, daß man zur Begrenzung eines zu starken pH-Abfalls Pufferlösungen eines pH-Werts 7 bis 10, vorzugsweise biologisch verträgliche Puffer und insbesondere Lösungen von Salzen des Ammoniums oder der Alkalimetalle mit Carbonsäuren oder Phosphorsäure einleitet.

10. Verfahren nach einem der Ansprüche 1 bis 9, dadurch gekennzeichnet, daß man zur Verbesserung der Abbaugeschwindigkeit Lösungen von Mangelelementen einleitet.

11. Verfahren nach einem der Ansprüche 1 bis 10, dadurch gekennzeichnet, daß man als Mangelelemente Verbindungen der Elemente N, P, S, K, Ca, Mg, Fe einleitet.

12. Verfahren nach einem der Ansprüche 1 bis 12, dadurch gekennzeichnet, daß man bei der Inbetriebnahme des Klärsystems oder nach Störungen als Hilfsstoffe leicht faulbare Substanzen, insbesondere Lösungen von Kohlehydraten, einleitet.

13. Verfahren nach einem der Ansprüche 1 bis 12, dadurch gekennzeichnet, daß man als Hilfsstoffe Emulgatoren zur Fettdispergierung einleitet und gewünschtenfalls die Dispersion mechanisch am Absetzen hindert.

## Claims

1. A process for the treatment of wastewaters heavily polluted by fats, proteins and/or carbohydrates of vegetable or animal origin or processing products thereof by degradation by microorganisms in a continuous flow reactor, in which - with simultaneous separation of fats and/or sludges -
- on flowing through a first part of the reactor, the free oxygen present in the water is consumed by aerobic and anaerobic microorganisms with at least partial degradation of the pollutants to fermentation products, and
- on flowing through another, adjoining part of the reactor, the fermentation products and any pollutants still present are converted in the presence of the anaerobic microorganisms into - predominantly - digester gas and biomass,
with if desired, addition of fertilizing and/or pH stabilizing substances or auxiliaries in order to reduce the susceptibility of the system to failure, characterized in that part of the wastewater and the microorganisms living therein are subjected to a residence time of any length in a flow-protected zone, blind-ending tubes filled with packings or sponges being used as the flow-protected zone.

2. A process as claimed in claim 1, characterized in that the anaerobic microorganisms used are mixed cultures of the type also found, for example, in the aerobic part of communal sewage treatment plants.

3. A process as claimed in claim 1 or 2, characterized in that digesting materials, such as anaerobic digested sludges, sediments of waters and/or faeces or biologically active or at least reactivatable preparations obtained therefrom are used for inoculation with anaerobic microorganisms.

4. A process as claimed in any of claims 1 to 3, characterized in that decentrally operated wastewater separators are used as the continuous flow reactor.

5. A process as claimed in any of claims 1 to 4, characterized in that a partial stream of the treated wastewater is returned to the continuous flow system, preferably to a part thereof through which the wastewater has previously flowed.

6. A process as claimed in any of claims 1 to 5, characterized in that part of the aerobic or anaerobic microorganisms is allowed to grow on stationary surfaces, such as walls, septums, floating packing elements and the like.

7. A process as claimed in any of claims 1 to 6, characterized in that digester gases formed are removed directly or through a valve preventing the rediffusion of oxygen.

8. A process as claimed in any of claims 1 to 7, characterized in that digester gases formed are removed with the treated wastewater.

9. A process as claimed in any of claims 1 to 8, characterized in that buffer solutions having a pH value of 7 to 10, preferably biologically compatible buffers and, in particular, solutions of salts of ammonium or the alkali metals with carboxylic acids or phosphoric acid, are introduced to limit an excessive fall in the pH.

10. A process as claimed in any of claims 1 to 9, characterized in that solutions of trace elements are introduced to improve the degradation rate.

11. A process as claimed in any of claims 1 to 10, characterized in that compounds of the elements N, P, S, K, Ca, Mg, Fe are introduced as trace elements.

12. A process as claimed in any of claims 1 to 12, characterized in that readily digestible substances, particularly solutions of carbohydrates, are used as auxiliaries when the treatment system is started up or after interruptions.

13. A process as claimed in any of claims 1 to 12, characterized in that emulsifiers for dispersing fats are introduced as auxiliaries and, if desired, the dispersion is mechanically prevented from sedimenting.

## Revendications

1. Procédé de clarification d'eaux résiduaires fortement chargées en graisses, albumines et/ou hydrates de carbone d'origine animale ou végétale ou de leurs produits de transformation, par dégradation par des microorganismes dans un réacteur en continu, dans lequel tout en séparant les graisses et/ou les boues :
- par balayage d'une première partie du réacteur au moyen de microorganismes vivants aérobies et anaérobies, on consomme l'oxygène libre de l'eau en dégradant au moins une partie des produits nocifs en produits de fermentation, et
- par balayage d'une autre partie de réacteur contiguë on transforme les produits de fermentation et éventuellement les produits nocifs encore présents en présence de microorganismes vivants anaérobies essentiellement en biogaz et en biomasse,
procédé dans lequel, pour diminuer le risque de panne du système, on peut ajouter si c'est souhaité des substances engraissantes et/ou stabilisant le pH, caractérisé en ce qu'on soumet une partie de l'eau résiduaire et des microorganismes qui y vivent à une période de séjour de durée appropriée dans une zone sans écoulement, en utilisant comme zone sans écoulement des tuyaux borgnes, qui sont remplis de corps de remplissage ou d'éponges.

2. Procédé selon la revendication 1, caractérisé en ce qu'on utilise comme microorganismes anaérobies vivants des cultures mixtes comme celles qu'on trouve par exemple aussi dans la partie aérobie d'unités communales de clarification.

3. Procédé selon l'une des revendications 1 ou 2, caractérisé en ce qu'on utilise pour l'inoculation avec des microorganismes vivants anaérobie des matériaux putrides comme des boues de fermentation anaérobies, des sédiments d'eau résiduaire et/ou des matières fécales ou des préparations biologiquement actives préparées à partir de ces matériaux ou au moins réactivables.

4. Procédé selon l'une des revendications 1 à 3, caractérisé en ce qu'on utilise comme réacteur en continu des dispositifs d'eau résiduaire décentralisés.

5. Procédé selon l'une des revendications 1 à 4, caractérisé en ce qu'on recycle une partie du courant de l'eau clarifiée dans le système en continu, de préférence dans une partie déjà balayée du système en continu.

6. Procédé selon l'une des revendications 1 à 5, caractérisé en ce qu'on laisse se développer une partie des microorganismes vivants aérobies et anaérobies sur des surfaces fixes comme des parois, septums, corps de remplissage flottants et analogues.

7. Procédé selon l'une des revendications 1 à 6, caractérisé en ce qu'on prélève directement les biogaz naissants ou par l'intermédiaire d'une soupape empêchant la rétrodiffusion de l'oxygène.

8. Procédé selon l'une des revendications 1 à 7, caractérisé en ce qu'on libère les biogaz avec l'eau clarifiée.

9. Procédé selon l'une des revendications 1 à 8, caractérisé en ce que pour limiter une trop forte chute de pH, on introduit des solutions tampons d'un pH de 7 à 10, de préférence des tampons compatibles biologiquement et notamment des solutions de sels d'ammonium ou de métaux alcalins avec des acides carboxyliques ou de l'acide phosphorique.

10. Procédé selon l'une des revendications 1 à 9, caractérisé en ce qu'on introduit des éléments de trace pour améliorer la vitesse de dégradation.

11. Procédé selon l'une des revendications 1 à 10, caractérisé en ce qu'on introduit comme élément de trace des composés des éléments N, P, S, K, Ca, Mg, Fe.

12. Procédé selon l'une des revendications 1 à 12, caractérisé en ce qu'on introduit lors de la mise en service du système de clarification ou après panne comme substance additionnelle des substances facilement putrescibles, notamment des solutions d'hydrates de carbone.

13. Procédé selon l'une des revendications 1 à 12, caractérisé en ce qu'on introduit comme substance additionnelle des émulsionnants pour disperser les graisses et le cas échéant on empêche mécaniquement le dépôt de la dispersion.
